(19) Europäisches Patentamt

European Patent Office

Office européen des brevets

(11) **EP 0 709 670 A1**

(12) **EUROPEAN PATENT APPLICATION**

(43) Date of publication:
01.05.1996 Bulletin 1996/18

(51) Int. Cl.$^6$: **G01N 27/406**

(21) Application number: **95202587.2**

(22) Date of filing: **26.09.1995**

(84) Designated Contracting States:
**DE FR GB IT**

(30) Priority: **31.10.1994 US 332165**

(71) Applicant: **GENERAL MOTORS CORPORATION**
**Detroit Michigan 48202 (US)**

(72) Inventors:
• **Chen, Kwo-Shyong David**
**Rochester Hillls, Michigan 48306 (US)**

• **Bonadies, Sherry Whitaker**
**Grand Blanc, Michigan 48439 (US)**

(74) Representative: **Denton, Michael John et al**
**Patent Section**
**1st Floor**
**Gideon House**
**28 Chapel Street**
**Luton Bedfordshire LU1 2SE (GB)**

(54) **Low power consumption thick film heater**

(57) The invention includes a combustion engine exhaust sensor having a thick film heater printed on a substrate using a thick film composition including a noble metal and about 5 to about 25 weight percent of a non-conductive ceramic material such as alumina ($Al_2O_3$) powder. The use of a nonconductive ceramic material in the thick film composition results in an exhaust sensor having a much smaller sensing element, lower electrical power consumption, fast light-off time, better thick film heater print ability and lower ink printing cost for the heating element.

**Description**

Field of the Invention

This invention relates to combustion engine exhaust sensors, and more particularly to an exhaust sensor having a lower power consumption thick film heater.

Background of the Invention

A thick film heater is a conductor film stripe printed or embedded in a substrate or a combustion engine exhaust sensor. Traditionally, the film is printed with platinum based ink with minor other precious metal additives.

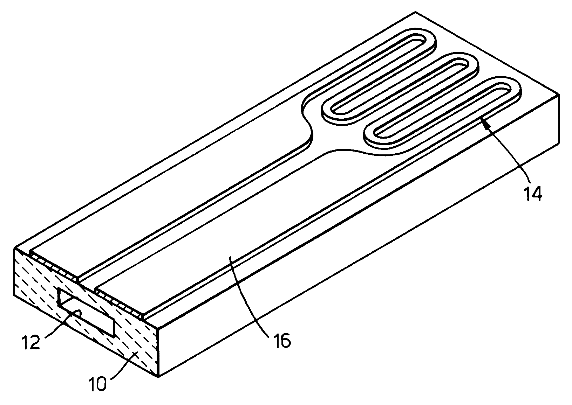

A thick film heater usually includes a substrate 10, an air reference channel 12 formed in the substrate, a printed heater including a serpentine portion 14 and (sometimes) a lead 16 as shown in the Figure. The serpentine portion includes substantially parallel legs with smaller width, which has a higher electrical resistance per unit length, than that of the lead. Generally, electrical resistance R of a conductor film material increases with temperature. When an electrical voltage V applied to the heater, the electrical power P generated in the heater can be expressed as

$$P = \frac{V_2}{R} = I_2 R$$

where R is resistance. R increases with a reduction in the width of the ink printed on the substrate. As a result, the majority of the electric heat is generated in the serpentine due to its narrower width and thus higher electrical resistance. In applications, the serpentine is located in the region needed to be heated. The main purpose of the lead is conducting the electric current to the serpentine, although some heat is generated in the lead.

The ideal operating temperature of a typical oxygen sensor is roughly between 350 to 850°C. To achieve this ideal operating temperature, the electrical power required should be optimized along with the design of the sensor, i.e., size, packaging, and etc.

In an oxygen sensor design, it is generally desirable to have smaller sensor size and lower electric power consumption. Although it is intuitive that a smaller sensor requires less electric power consumption, the design of a thick film heater on a very small sensor without external power regulation presents a major technical hurdle. In other words, if the electrical power is not properly reduced, a small sensor can heat up to extreme temperature at which the sensor may not function properly or excessive thermal stresses develop.

The electrical system on an automotive vehicle is powered by a standard 13 volt battery. When a thick film heater is connected to a standard battery, the applied voltage is always about 13 volts. The electric power to the heater is then determined by the total resistance of the heater. When less electric power is desired, the electrical resistance of the heater needs to be increased.

There are several conventional approaches to increase the electric resistance, such as, reducing the print height of the thick film heater, reducing the widths of the serpentine and the lead, and increasing the line length of the serpentine and the lead. Each of the above approaches has its limits or technical difficulties. For example, reducing the print height can only increase the resistance to a certain limit. Reducing the width of the serpentine loses the printability at some point. Reducing the lead width raises the temperature in the lead region which is not desirable for electrical connection. Increasing the line length of the serpentine and the lead presents a conflict with the intention of reducing the size of the sensor.

The present invention overcomes many of the disadvantages of the prior art.

SUMMARY OF THE INVENTION

The invention includes a combustion engine exhaust sensor having a thick film heater printed on a substrate wherein the thick film ink composition includes a noble metal and about 5 to about 25 weight percent of a nonconductive ceramic powder such as alumina ($Al_2O_3$) powder. The use of a nonconductive ceramic powder in the thick film ink composition results in an exhaust sensor having a much smaller sensing element, lower electrical power consumption, fast light-off time, better thick film heater print ability and lower ink printing cost for the heating element.

These and other objects, features and advantages will be apparent from the following brief description of the drawing, detailed description and appended claims and drawing.

Brief Description of the Drawing

The Figure illustrates a heating element according to the present invention.

Detailed Description

A thick film heater according to the present invention and as shown the Figure is made using an ink composition including a nonconductive ceramic powder present in an amount ranging from about 5 to about 25, preferably about 7 to about 15, and most preferably about 9 to about 11 weight percent of the total ink composition. Suitable nonconductive ceramic powders include those which match the substrate and ink metal in refractory, chemical compatibility, thermal expansion, and stability in operation. For examples, silica, cordierite, and alumina ($Al_2O_3$) can be used as the nonconductive powder in the ink. Accordingly to the present invention a thick film heater composition may include about 5, 10, 12, 15, 20, and 25 weight percent ceramic material such as alumina.

The ink also contains a noble metal in an amount ranging from about 60 to about 85, preferably about 65 to about 75, and most favorably about 68 to about 75 weight percent. Suitable noble metals include platinum, rhodium, palladium, and silver. Other metals suitable for thick film ink include tungsten and molybdenum. For example, a preferred ink composition would comprise 69% by weight platinum, 2% by weight rhodium, and 10% by weight alumina powder. The ink may also include a binder. Such a composition can be utilized to print thick film heaters on very small flat plate sensing elements. Table 1 compares the sizes, operation temperatures, the light-off times and power consumption of the sensing elements printed with standard platinum/rhodium ink and that with a platinum/rhodium/alumina ink according to the present invention. As can be seen from Table 1, utilizing a thick film heater ink composition according to the present invention results in the element size being greatly reduced, operating temperature increased, light-off time (time for heater to go from room temperature to 500°C) significantly reduced and power consumption lowered.

Table 1

| Comparison of standard and low power ink heaters | | |
|---|---|---|
| ink | standard heater Pt/Rh | low power heater Pt/Rh/$Al_2O_3$ |
| element length (mm) | 45 | 35 |
| element width (mm) | 4.2 | 3.5 |
| element height (mm) | 1.6 | 1.2 |
| operating temp (°C) | 650 | 700 |
| light-off time (sec) | 18 | 11 |
| power consumption (W) | 8.2 | 6.3 |

**Claims**

1. A combustion engine exhaust sensor 10 comprising a heating element including a substrate and printed heater 14 on one of the faces of the substrate prepared from a thick film ink, said ink comprising about 60 to 85 weight percent of noble metal and about 7 to about 15 weight percent of at least one member selected from the group consisting of aluminum oxide and cordierite.

2. A combustion engine exhaust sensor as set forth in claim 1 wherein said member consists of aluminum oxide.

3. A combustion engine exhaust sensor as set forth in claim 1 wherein said member is present in an amount ranging from about 9 to 11 weight percent of the ink.

4. A combustion engine exhaust sensor as set forth in claim 1 wherein said ink is printed in a convoluted pattern on the substrate.

5. A combustion engine exhaust sensor as set forth in claim 2 wherein the ink is printed on the substrate to form a lead portion.

European Patent
Office

**EUROPEAN SEARCH REPORT**

Application Number

EP 95 20 2587

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | DE-A-39 07 312 (NGK INSULATORS)<br>* column 5, line 25 - column 6, line 31 *<br>* column 8, line 65 - column 9, line 45 *<br>--- | 1,2,4 | G01N27/406 |
| Y | EP-A-0 064 666 (NISSAN MOTOR)<br>* page 7, line 19 - page 10, line 20 *<br>--- | 1,2,4 | |
| A | EP-A-0 167 297 (NGK INSULATORS)<br>* page 5, line 26 - page 6, line 12 *<br>--- | 1-4 | |
| A | DE-A-38 02 051 (NGK INSULATORS)<br>* column 10, line 46 - column 11, line 4 *<br>--- | 1-4 | |
| A | EP-A-0 343 533 (GTE LABORATORIES)<br>* column 6, line 43 - column 7, line 22 *<br>--- | 1,4 | |
| A | DE-A-40 06 085 (R. BOSCH)<br>* abstract *<br>--- | 1 | |
| A | DE-A-39 36 103 (NGK SPARK PLUG)<br>----- | | |
| | | | TECHNICAL FIELDS SEARCHED (Int.Cl.6)<br><br>G01N |

The present search report has been drawn up for all claims

| Place of search | Date of completion of the search | Examiner |
|---|---|---|
| THE HAGUE | 24 January 1996 | CALLEWAERT, H |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document